# EUROPEAN PATENT APPLICATION

(11) **EP 4 343 466 A1**
(43) Date of publication of application: **27.03.2024**
(21) Application number: 23815094.0
(22) Date of filing: 26.05.2023
(51) Int. Cl.: G05B 19/042, D06F 29/00, A47L 11/29

(54) **OPERATION CONTROL METHOD FOR DOUBLE-WASHING MACHINE, ELECTRIC APPLIANCE AND DOUBLE-WASHING MACHINE**

(30) Priority: 31.05.2022 CN 202210611901; 17.10.2022 CN 202211268167
(71) Applicant: Wuxi Little Swan Electric Co., Ltd., Wuxi, Jiangsu 214028 (CN)
(72) Inventor: MIAO, Yulai, Wuxi, Jiangsu 214028 (CN); WANG, Haifeng, Wuxi, Jiangsu 214028 (CN); QUE, Qiang, Wuxi, Jiangsu 214028 (CN)
(74) Representative: RGTH
(86) International application number: PCT/CN2023/096488
(87) International publication number: WO 2023/231911

(57) **Abstract**

Provided are an operation control method of a dual washing machine, an electric appliance, and a dual washing machine. The operation control method of the dual washing machine includes: obtaining an in-base-station operation request of a floor cleaner; obtaining a predetermined operation characteristic of a clothes treatment device; and controlling, in accordance with the predetermined operation characteristic, whether the floor cleaner operates based on the in-base-station operation request. A base station of the floor cleaner is located in a space below the clothes treatment device. In the technical solutions of the present disclosure, mutual transmission of signals can be performed between the floor cleaner and the clothes treatment device. When it is determined that the operation process of the clothes treatment device may affect the operation performance of the floor cleaner based on the predetermined operation characteristic of the clothes treatment device, the floor cleaner can be controlled to prohibit operation based on the in-base-station operation request. Therefore, mutual influence between the electric appliances is effectively avoided, thereby improving the intelligent degree of the operation of the dual washing machine.

## Description

The present application claims priority to Chinese Patent Application No. 202210611901.9, titled "OPERATION CONTROL METHOD FOR OF DUAL WASHING MACHINE, ELECTRIC APPLIANCE, AND DUAL WASHING MACHINE", and filed with China National Intellectual Property Administration on May 31, 2022, and Chinese Patent Application No. 202211268167.7, titled "OPERATION CONTROL METHOD FOR OF DUAL WASHING MACHINE, ELECTRIC APPLIANCE, AND DUAL WASHING MACHINE", and filed with China National Intellectual Property Administration on October 17, 2022, the entire contents of which are incorporated herein by reference.

### FIELD

The present disclosure relates to the technical field of household appliances, and more particularly, to an operation control method of a dual washing machine, an electric appliance, and a dual washing machine.

### BACKGROUND

With the continuous improvement of people's living standards and the rapid development of intelligent electric appliances, sweepers have gradually entered households. An intelligent sweeper needs one special water inlet pipe for flushing dirt and dust in the internal cavity of the sweeper and a special water outlet pipe for discharging the sewage. At present, domestic washing machines also need one water inlet pipe and one water outlet pipe to realize water inflowing and water outflowing functions of washing, rinsing, and spin-drying. However, the space for the washing machine at home is limited. If a sweeper and a washing machine use a water inlet pipe and a water outlet pipe independent of each other and operate in different independent spaces, the sweeper and the washing machine will cause excessive plumbing at home and increase the occupied area of electric appliances, thus reducing the user's satisfaction.

In the related art, the washing machine and the sweeper share a water inlet pipeline and a water outlet pipeline and share a floor space, which is advantageous for saving the occupied floor space and facilitating water path sharing between the washing machine and the sweeper share. However, the sweeper and the washing machine operate independently in the actual application process. Since there is a shared space between the washing machine and the sweeper, when the sweeper and the washing machine have operating requirements simultaneously, the operation process of one of the washing machine and the sweeper may affect the operation performance of another one of the washing machine and the sweeper, affecting the user's experience.

### SUMMARY

### (1) Technical Problem to be Solved

The technical problem to be solved by the present disclosure is to solve the problems that the sweeper and the washing machine operate independently of each other in the existing practical application process; and since there is a shared space between the sweeper and the washing machine, when the sweeper and the washing machine have operating requirements simultaneously, the operation process of one of the sweeper and the washing machine may affect the operation performance of another one of the sweeper and the washing machine, thereby affecting the user's experience.

### (2) Technical Solutions

In order to solve the above-mentioned technical problems, the present disclosure provides an operation control method of a dual washing machine, an electric appliance, and a dual washing machine. Signal mutual transmission can be performed between a floor cleaner and a clothes treatment device. When it is determined in accordance with a predetermined operation characteristic of the clothes treatment device that the operation process of the clothes treatment device may affect the operation performance of the floor cleaner, the floor cleaner can be controlled to prohibit operation based on the in-base-station operation request, such that the mutual influence between the electric appliances is effectively avoided, thereby improving the intelligent degree of the operation of the dual washing machine.

In a first aspect, the present disclosure provides an operation control method of a dual washing machine. The operation control method includes: obtaining an in-base-station operation request of a floor cleaner; obtaining a predetermined operation characteristic of a clothes treatment device; and controlling, in accordance with the predetermined operation characteristic, whether the floor cleaner operates based on the in-base-station operation request. A base station of the floor cleaner is located within a space below the clothes treatment device.

In some embodiments, the in-base-station operation request includes at least one of a charging request, a dust collection request, or a self-cleaning request.

In some embodiments, the obtaining the predetermined operation characteristic of the clothes treatment device includes obtaining a vibration degree of the clothes treatment device. The controlling, in accordance with the predetermined operation characteristic, whether the floor cleaner operates based on the in-base-station operation request includes: controlling, in accordance with the vibration degree, whether the floor cleaner operates based on the in-base-station operation request; when the vibration degree is greater than a predetermined vibration degree, controlling the floor cleaner to prohibit operation based on the in-base-station operation request; and when the vibration degree is smaller than or equal to the predetermined vibration degree, controlling the floor cleaner to operate based on the in-base-station operation request.

In some embodiments, the obtaining the vibration degree of the clothes treatment device includes: obtaining an operation stage of the clothes treatment device and obtaining the vibration degree of the clothes treatment device based on the operation stage, wherein when the clothes treatment device is in a spin-drying stage, a drainage stage, or a pre-washing weighing stage, it is determined that the vibration degree of the clothes treatment device is greater than the predetermined vibration degree; or obtaining a vibration sensing detection parameter of the clothes treatment device and obtaining the vibration degree of the clothes treatment device based on the vibration sensing detection parameter, wherein when the vibration sensing detection parameter is larger than a predetermined parameter, it is determined that the vibration degree of the clothes treatment device is greater than the predetermined vibration degree.

In some embodiments, the obtaining the predetermined operation characteristic of the clothes treatment device includes obtaining an operation stage of the clothes treatment device. The controlling, in accordance with the predetermined operation characteristic, whether the floor cleaner operates based on the in-base-station operation request includes: controlling, in accordance with the operation stage of the clothes treatment device, whether the floor cleaner operates based on the in-base-station operation request; and when the clothes treatment device is in a spin-drying stage, a drainage stage, or a pre-washing weighing stage, controlling the floor cleaner to prohibit operation based on the in-base-station operation request.

In some embodiments, the operation control method further includes: when the in-base-station operation request is a dust collection request: obtaining a voice prompt state of the clothes treatment device; controlling, in accordance with the voice prompt state, whether the floor cleaner operates based on the dust collection request; and when the clothes treatment device needs to provide a voice prompt to a user, controlling the floor cleaner to prohibit operation based on the dust collection request.

In a second aspect, the present disclosure also provides an operation control method of a dual washing machine. The operation control method includes: sending an in-base-station operation request of a floor cleaner to a clothes treatment device; obtaining an operation state control signal of the floor cleaner, wherein the operation state control signal of the floor cleaner is generated based on a predetermined operation characteristic of the clothes treatment device; and controlling, in accordance with the operation state control signal of the floor cleaner, whether the floor cleaner operates based on the in-base-station operation request, wherein a base station of the floor cleaner is located within a space below the clothes treatment device.

In some embodiments, the in-base-station operation request includes at least one of a charging request, a dust collection request, or a self-cleaning request.

In some embodiments, the controlling, in accordance with the operation state control signal of the floor cleaner, whether the floor cleaner operates based on the in-base-station operation request includes: when it is determined in accordance with the operation state control signal of the floor cleaner that the vibration degree of the clothes treatment device is greater than a predetermined vibration degree, controlling the floor cleaner to prohibit operation based on the in-base-station operation request; and when it is determined in accordance with the operation state control signal of the floor cleaner that the vibration degree of the clothes treatment device is smaller than or equal to the predetermined vibration degree, controlling the floor cleaner to operate based on the in-base-station operation request.

In some embodiments, the controlling, in accordance with the operation state control signal of the floor cleaner, whether the floor cleaner operates based on the in-base-station operation request includes: when it is determined in accordance with the operation state control signal of the floor cleaner that the clothes treatment device is in a spin-drying stage, a drainage stage, or a pre-washing weighing stage, controlling the floor cleaner to prohibit operation based on the in-base-station operation request.

In a third aspect, the present disclosure also provides an electrical appliance including a memory and a processor. The processor is configured to perform, by invoking programs or instructions stored in the memory, the operation control method of the dual washing machine according to the first aspect or the operation control method of the dual washing machine according to the second aspect.

In a fourth aspect, the present disclosure also provides a dual washing machine including a floor cleaner and a clothes treatment device communicatively connected to the floor cleaner. The clothes treatment device is configured to perform the operation control method of the dual washing machine according to the first aspect. The floor cleaner is configured to perform the operation control method of the dual washing machine according to the second aspect.

In a fifth aspect, the present disclosure also provides a computer storage medium. The computer storage medium may store a program which may implement, when being performed, some or all of the implementation modes of the operation control method of the dual washing machine according to the first aspect of the present disclosure.

In a sixth aspect, the present disclosure also provides a computer storage medium. The computer storage medium may store a program which, when being performed, may implement some or all of the implementation modes of the operation control method of the dual washing machine according to the second aspect of the present disclosure.

### (3) Beneficial Effects

The technical solutions provided by the present disclosure have the following advantages as compared to the related art.

The present disclosure provides an operation control method of a dual washing machine. The operation control method includes: obtaining an in-base-station operation request of a floor cleaner; obtaining a predetermined operation characteristic of a clothes treatment device; and controlling, in accordance with the predetermined operation characteristic, whether the floor cleaner operates based on the in-base-station operation request. A base station of the floor cleaner is located in the space below the clothes treatment device. Therefore, signal transmission can be carried out between the floor cleaner and the clothes treatment device. Based on the predetermined operation characteristics of the clothed treatment device, the floor cleaner can be controlled to prohibit operation based on the in-base-station operation request when it is determined that the operation process of the clothes treatment device may affect the operation performance of the floor cleaner. When waiting for the predetermined operation characteristics of the clothes treatment device to update, the floor cleaner is controlled to operate based on the in-base-station operation request, effectively avoiding the problem of the operation process of one electrical appliance affecting the operation performance of another electrical appliance, which would otherwise affect the user experience. This improves the intelligence level of the operation of the dual washing machine.

It is to be understood that both the foregoing general description and the following detailed description are exemplary and explanatory only and are not intended to limit the present disclosure.

### BRIEF DESCRIPTION OF THE DRAWINGS

The accompanying drawings are incorporated in and constitute a part of this description, illustrate embodiments of the present disclosure, and serve to explain the principles of the present disclosure along with the description.

In order to explain the embodiments of the present disclosure or the technical solutions in the related art more clearly, the following will briefly introduce the drawings used in the description of the embodiments and the related art. Those skilled in the art can obtain other drawings based on these drawings without involving creative efforts.
FIG. 1 is a schematic flowchart of an operation control method of a dual washing machine according to an embodiment of the present disclosure.
FIG. 2 is a schematic diagram showing a structure of an operation control apparatus of a dual washing machine according to an embodiment of the present disclosure.
FIG. 3 is a schematic flowchart of another operation control method of a dual washing machine according to an embodiment of the present disclosure.
FIG. 4 is a schematic diagram showing a structure of another operation control apparatus of a dual washing machine according to an embodiment of the present disclosure.
FIG. 5 is a schematic diagram showing a structure of an electric appliance according to an embodiment of the present disclosure.
FIG. 6 is a schematic diagram showing a structure of a dual washing machine according to an embodiment of the present disclosure.

### DETAILED DESCRIPTION

To make the objects, technical solutions, and advantages of the embodiments of the present disclosure clearer, the technical solutions in the embodiments of the present disclosure will be clearly and completely described below. Obviously, the described embodiments are only some of the embodiments of the present disclosure, rather than all of the embodiments. Based on the embodiments of the present disclosure, all other embodiments obtained by those skilled in the art without involving any inventive efforts fall within the scope of the present disclosure.

A floor cleaner and a clothes treatment device operate independently in an actual application process. Since there is a shared space between the floor cleaner and the clothes treatment device, when the floor cleaner and the clothes treatment device have working requirements simultaneously, the operation process of one of the floor cleaner and the clothes treatment device may affect the operation performance of another one of the floor cleaner and the clothes treatment device, affecting the user's experience.

In order to solve the technical problems in the related art, embodiments of the present disclosure provide an operation control method of a dual washing machine. A predetermined operation characteristic of a clothes treatment device is obtained while the clothes treatment device obtains an in-base-station operation request of a floor cleaner. It is determined in accordance with the predetermined operation characteristic of the clothes treatment device whether to allow the floor cleaner to operate based on the in-base-station operation request. When it is determined in accordance with the predetermined operation characteristic of the clothes treatment device that the floor cleaner is allowed to operate based on the in-base-station operation request, the clothes treatment device controls the floor cleaner to operate based on the in-base-station operation request. When it is determined in accordance with the predetermined operation characteristics of the clothes treatment device that the floor cleaner is not allowed to operate based on the in-base-station operation request, the clothes treatment device controls the floor cleaner to prohibit operation based on the in-base-station operation request. Therefore, mutual transmission of signals can be achieved between the floor cleaner and the clothes treatment device, effectively avoiding the problem that the operation process of one electric appliance affects the operation performance of another electric appliance and thus affects the user's experience, thereby improving the intelligent degree of the dual washing machine.

Hereinafter, a method, an electric appliance, and a dual washing machine according to embodiments of the present disclosure will be described by way of example with reference to the accompanying drawings.

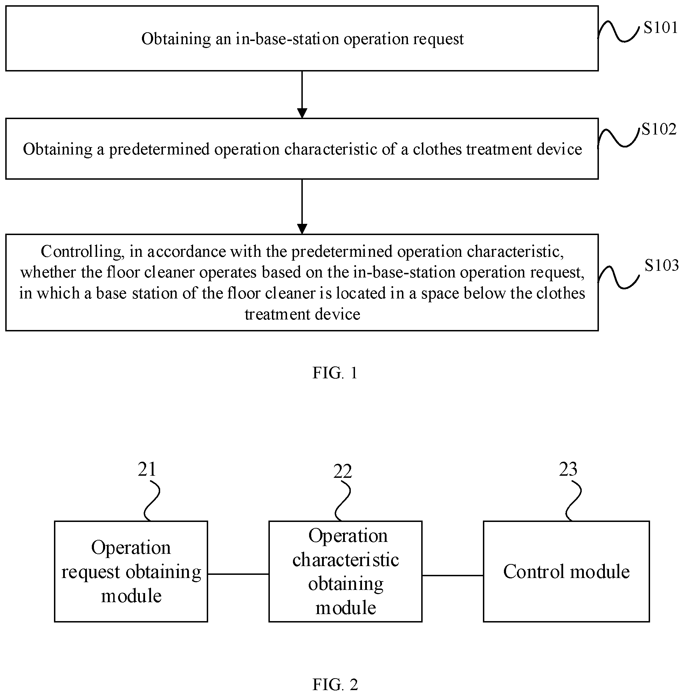

FIG. 1 is a schematic flowchart of an operation control method of a dual washing machine according to an embodiment of the present disclosure. This method is applicable to application scenarios where control of the dual washing machine is required. The operation control method may be performed by an operation control apparatus of a dual washing machine according to an embodiment of the present disclosure, such as a controller of a clothes treatment device. The operation control apparatus of the dual washing machine may be implemented in software and/or hardware. As shown in FIG. 1, the operation control method includes operations at operations at blocks S101 to S103 below.

At block S101, an in-base-station operation request of a floor cleaner is obtained.

In an embodiment, when the floor cleaner has an operation requirement in a base station. That is, when the floor cleaner needs to enter a floor cleaner base station in a space below a clothes treatment device to perform a predetermined action, the floor cleaner needs to send a corresponding in-base-station operation request to the base station. Further, the base station sends the in-base-station operation request to the clothes treatment device, and accordingly, the clothes treatment device obtains the in-base-station operation request. It needs to be noted that the in-base-station operation request may be a request sent by the floor cleaner or a request sent from the clothes treatment device or the base station to the floor cleaner, such as sending a recall instruction to the floor cleaner, which will not be particularly limited by the embodiments of the present disclosure.

In some embodiments, the in-base-station operation request includes at least one of a charging request, a dust collection request, or a self-cleaning request. In an exemplary embodiment of the present disclosure, a charging structure, a dust collecting structure, and a self-cleaning structure of the floor cleaner are provided in the floor cleaner base station. When the floor cleaner needs to be charged, the floor cleaner can send a charging request to the base station. When the floor cleaner needs to perform dust collection, the floor cleaner can send a dust collection request to the base station. When the floor cleaner requires self-cleaning, the floor cleaner can send a self-cleaning request to the base station. Therefore, when the floor cleaner needs to be charged, or perform dust-collecting or self-cleaning, the floor cleaner can send a corresponding in-base-station operation request to the base station. Further, the clothes treatment device obtains the corresponding in-base-station operation request. In an embodiment, the floor cleaner is, for example, but not limited to, a sweeper, and the clothes treatment device is, for example, but not limited to, a washing machine.

At block S102, a predetermined operation characteristic of the clothes treatment device is obtained.

In an exemplary embodiment of the present disclosure, the predetermined operation characteristic of the clothes treatment device may be used for characterizing the operation state of the clothes treatment device, and the obtaining the predetermined operation characteristic of the clothes treatment device is equivalent to obtaining the operation state of the clothes treatment device. Therefore, the operation state of the clothes treatment device can be determined by obtaining the predetermined operation characteristic of the clothes treatment device.

In some embodiments, the predetermined operation characteristic of the clothes treatment device may be a vibration degree of the clothes treatment device, and it is possible to obtain an operation stage of the clothes treatment device and obtain the vibration degree of the clothes treatment device based on the operation stage. When the clothes treatment device is in a spin-drying stage, a drainage stage, or a pre-washing weighing stage, it is determined that the vibration degree of the clothes treatment device is greater than a predetermined vibration degree.

In an exemplary embodiment of the present disclosure, the vibration degree of the clothes treatment device is related to a current operation stage of the clothes treatment device. For example, when the clothes treatment device is in the spin-drying stage, a rotation speed of an inner drum of the clothes treatment device is relatively fast, and the vibration degree of the clothes treatment device is relatively great. When the clothes treatment device is in the pre-washing weighing stage, the inner cylinder of the clothes treatment device rotates to obtain a weight of the clothes to be washed through a rotation torque, and at this moment, the rotation of the inner drum may cause a greater vibration degree of the clothes treatment device. When the clothes treatment device is in the drainage stage, the spin-drying operation is generally performed immediately after completion of the drainage stage. As such, the rotation speed of the inner drum of the clothes treatment device is relatively fast, and the vibration degree of the clothes treatment device is relatively great, such that it can be determined that the current vibration degree of the clothes treatment device is greater than the predetermined vibration degree.

In some embodiments, the vibration degree of the clothes treatment device may be obtained by providing a vibration sensor in the clothes treatment device, such that when a parameter detected by the vibration sensor is greater than a predetermined parameter, it is determined that the current vibration degree of the clothes treatment device is greater than the predetermined vibration degree. In some other embodiments, the vibration degree of the clothes treatment device may also be obtained by other technical means well known to those skilled in the art, which is not specifically limited by the embodiments of the present disclosure.

At block S103, in accordance with the predetermined operation characteristic, the floor cleaner is controlled to operate or not operate based on the in-base-station operation request. The base station of the floor cleaner is located within a space below the clothes treatment device.

In an exemplary embodiment of the present disclosure, after the floor cleaner sends the in-base-station operation request to the base station, whether the floor cleaner can operate based on the in-base-station operation request needs to be controlled in accordance with the predetermined operation characteristic of the clothes treatment device. When the characteristic is determined in accordance with the predetermined operation characteristic of the clothes treatment device to allow the floor cleaner to operate based on the in-base-station operation request, the floor cleaner can be controlled to operate based on the in-base-station operation request. When the characteristic is determined in accordance with the predetermined operation characteristic of the clothes treatment device to not allow the floor cleaner to operate based on the in-base-station operation request, the floor cleaner can be controlled to prohibit operation based on the in-base-station operation request, for example, the floor cleaner can be controlled to stand in place.

Taking the floor cleaner sending a charging request as an example to provide exemplary description, when the floor cleaner needs to be charged, the charging request can be sent to the base station. If the predetermined operation characteristic of the clothes treatment device satisfies the charging request of the floor cleaner, the floor cleaner is controlled to be charged. The floor cleaner is controlled to prohibit charging if the predetermined operation characteristic of the clothes treatment device does not satisfy the charging request of the floor cleaner. Taking the floor cleaner sending a dust collection request as an example to provide exemplary description, when the floor cleaner needs to collect dust, the dust collection request can be sent to the base station. If the predetermined operating characteristic of the clothes treatment device satisfies the dust collection request of the floor cleaner, the floor cleaner is controlled to perform dust collection. If the predetermined operation characteristic of the clothes treatment device does not satisfy the dust collection request of the floor cleaner, the floor cleaner is controlled to prohibit dust collection. Taking the floor cleaner sending a self-cleaning request as an example to provide exemplary description, when the floor cleaner needs self-cleaning, the floor cleaner can send the self-cleaning request to the base station. If the predetermined operation characteristic of the clothes treatment device satisfies the self-cleaning request of the floor cleaner, the floor cleaner is controlled to perform self-cleaning. If the predetermined operation characteristic of the clothes treatment device does not satisfy the self-cleaning request of the floor cleaner, the floor cleaner is controlled to prohibit self-cleaning.

In some embodiments, the predetermined operation characteristics of the clothes treatment device include the vibration degree of the clothes treatment device. The vibration degree of the clothes treatment device is obtained to determine in accordance with the vibration degree whether to allow the floor cleaner to operate based on the in-base-station operation request.

In an exemplary embodiment of the present disclosure, it is required to obtain the vibration degree of the clothes treatment device after the clothes treatment device obtains the in-base-station operation request sent by the floor cleaner. If it is determined that the floor cleaner operates based on the in-base-station operation request, the clothes treatment device is vibrated to a great extent, which may easily affect the operation performance of the floor cleaner, such as affecting charging, dust collection, and self-cleaning of the floor cleaner. In this case, the floor cleaner can be controlled to be prohibited from operating based on the in-base-station operation request.

In an embodiment, when the floor cleaner needs to enter the base station for charging, a charging contact is provided in the base station. After the floor cleaner enters the base station, a charging contact of the floor cleaner contacts the charging contact of the base station to achieve charging. When the vibration degree of the clothes treatment device is great, the great vibration degree of the clothes treatment device may easily result in the condition that the floor cleaner cannot achieve docking with the charging contact point of the base station, and even causes an electrical safety problem. Therefore, when the vibration degree of the clothes treatment device is great, in order to avoid the above problem, the clothes treatment device controls the floor cleaner to prohibit charging and waits for signal update. That is, the floor cleaner is allowed to be charged when the vibration degree of the clothes treatment device is reduced to meet the requirement.

In an embodiment, when the floor cleaner needs to enter the base station for dust collection, a small dust collection box of the floor cleaner is engaged with a large dust collection box of the floor cleaner base station through a pipeline, and dust in the small dust collection box is suctioned into the large dust collection box by a fan. If the vibration degree of the clothes treatment device is great in this case, the small dust collection box in the floor cleaner is prone to being out of alignment with the large dust collection box in the floor cleaner base station, thereby causing problems such as air leakage and dust exposure. Therefore, when the vibration degree of the clothes treatment device is great, in order to avoid the above-mentioned problems, the clothes treatment device controls the floor cleaner to prohibit dust collection and waits for signal update. That is, the floor cleaner is allowed to collect dust when the vibration degree of the clothes treatment device is reduced to meets the requirement.

In an embodiment, when the floor cleaner needs to enter the base station for self-cleaning, the floor cleaner enters a fixed position in the base station, and is self-cleaned with a self-cleaning structure, such as, but not limited to, a brush in the base station. If the vibration degree of the clothes treatment device is great in this case, the effect of the self-cleaning is easily affected. Therefore, when the vibration degree of the clothes treatment device is great, in order to avoid the above-mentioned problem, the clothes treatment device controls the floor cleaner to prohibit self-cleaning and waits for signal update. That is, the floor cleaner is allowed to perform self-cleaning when the vibration degree of the clothes treatment device is reduced to meet the requirement. In an embodiment, the floor cleaner may continuously send the in-base-station operation request to the clothes treatment device, or may re-obtain the in-bas-station operation request of the floor cleaner after the state of the clothes treatment device state is updated.

In view of the above, a predetermined vibration degree may be set. It is determined whether to allow the floor cleaner to operate based on the in-base-station operation request by comparing a logical relationship between the vibration degree of the clothes treatment device and the predetermined vibration degree. In an exemplary embodiment of the present disclosure, when the vibration degree of the clothes treatment device is greater than the predetermined vibration degree, the clothes treatment device controls the floor cleaner to prohibit operation based on the in-base-station operation request. When the vibration degree of the clothes treatment device is smaller than or equal to the predetermined vibration degree, the clothes treatment device controls the floor cleaner to operate based on the in-base-station operation request.

Therefore, when it is obtained that the vibration degree of the clothes treatment device is great, i.e., when the vibration degree is greater than the predetermined vibration degree, the in-base-station operation request sent by the floor cleaner is rejected. When it is obtained that the vibration degree of the clothes treatment device is smaller than or equal to the predetermined vibration degree, the operation request in the base station is allowed. In this way, the floor cleaner is controlled to operate based on the in-base-station operation request at an appropriate time, such that at least one of charging, dust collection, or self-cleaning of the floor cleaner can be accomplished, and the interference with at least one of charging, dust collection, or self-cleaning performed by the floor cleaner that is caused by the floor cleaner operation based on the in-base-station operation request at an inappropriate time may be avoided.

It needs to be noted that when the clothes treatment device is in a predetermined state, the clothes treatment device controls the floor cleaner to prohibit operation based on the in-base-station operation request. In this case, it is preferable to control the floor cleaner to be located outside the base station or away from the base station, or to allow the floor cleaner to be located in the base station and the floor cleaner is controlled to not perform a corresponding action in the base station.

In some embodiments, when the in-base-station operation request is a dust collection request, a voice prompt state of the clothes treatment device can be obtained. Whether the floor cleaner operates based on the dust collection request is controlled in accordance with the voice prompt state. The floor cleaner is controlled to prohibit operation in accordance with the dust collection request when the clothes treatment device needs to provide a voice prompt to the user. For example, the floor cleaner is controlled to prohibit operation based on the dust collection request when a washing program of the clothes treatment device is completed and a beeping prompt is emitted.

In an exemplary embodiment of the present disclosure, when the floor cleaner is performing dust collection to make a loud sound, and when the washing program of the clothes treatment device is completed and the beeping prompt is emitted, the user may not be able to hear the beeping sound when the washing program of the clothes treatment device is completed due to the loud sound during the dust collection. For example, the clothes treatment device beeps to prompt when the washed clothes are to be taken out. If the integration of the floor cleaner causes the user to ignore the prompt, the clothes may be stuck in the clothes treatment device, which affects the user experience. Based on this, when the clothes treatment device provides a beeping prompt to the user, if the floor cleaner sends a dust collection request, it is required to prohibit the floor cleaner from operating in accordance with the dust collection request. The floor cleaner is allowed to perform a dust collection operation after the prompt is completed.

In some embodiments, the obtaining the predetermined operation characteristic of the clothes treatment device includes: obtaining an operation stage of the clothes treatment device; and the controlling, in accordance with the predetermined operation characteristic, whether the floor cleaner operates based on the in-base-station operation request includes: controlling, in accordance with the operation stage of the clothes treatment device, whether the floor cleaner operates based on the in-base-station operation request; and when the clothes treatment device is in a spin-drying stage, a drainage stage, or a pre-washing weighing stage, controlling the floor cleaner to prohibit operation based on the in-base-station operation request.

In an exemplary embodiment of the present disclosure, when the current operation stages of the clothes treatment device vary, and the degrees of vibration of the clothes treatment device vary. For example, when the clothes treatment device is in the spin-drying stage, the rotation speed of the inner drum of the clothes treatment device is relatively fast, and the vibration degree of the clothes treatment device is relatively great. When the clothes treatment device is in the pre-washing weighing stage, the inner drum of the clothes treatment device rotates to obtain a weight of the clothes to be washed through a rotation torque, and in this case, the rotation of the inner drum may cause a greater vibration degree of the clothes treatment device. When the clothes treatment device is in the drainage stage, the spin-drying operation is generally performed immediately after the completion of the drainage stage. Similarly, the rotation speed of the inner drum of the clothes treatment device is relatively fast, and the vibration degree of the clothes treatment device is relatively great. In the aforementioned case, the floor cleaner can be controlled to prohibit operation based on the in-base-station operation request. After the clothed treatment device completes the spin-drying stage, the drainage stage, or the pre-washing weighing stage, the floor cleaner can be controlled to operate based on the in-base-station operation request.

According to the operation control method of the dual washing machine of the embodiments of the present disclosure, the predetermined operation characteristic of the clothes treatment device is obtained while the clothes treatment device obtains the in-base-station operation request sent by the floor cleaner, and it is determined in accordance with the predetermined operation characteristic of the clothes treatment device whether to allow the floor cleaner to operate based on the in-base-station operation request. When it is determined in accordance with the predetermined operation characteristic of the clothes treatment device that the floor cleaner is allowed to operate based on the in-base-station operation request, the clothes treatment device controls the floor cleaner to operate based on the in-base-station operation request. When it is determined in accordance with the predetermined operation characteristics of the clothes treatment device that the floor cleaner is not allowed to operate based on the in-base-station operation request, the clothes treatment device controls the floor cleaner to prohibit operation based on the in-base-station operation request. Therefore, mutual transmission of signals can be achieved between the floor cleaner and the clothes treatment device, effectively avoiding the problem that the operation process of one electric appliance affects the operation performance of another electric appliance and thus affects the user's experience, thereby improving the intelligent degree of the dual washing machine.

An embodiment of the present disclosure further provides an operation control apparatus of a dual washing machine based on the same inventive concept. FIG. 2 is a schematic diagram showing a structure of an operation control apparatus of a dual washing machine according to an embodiment of the present disclosure. As shown in FIG. 2, the operation control apparatus includes an operation request obtaining module 21, an operation characteristic obtaining module 22, and a control module 23. The operation request obtaining module is configured to obtain an in-base-station operation request of a floor cleaner. The operation characteristic obtaining module 22 is configured to obtain a predetermined operation characteristic of a clothes treatment device. The control module 23 is configured to control, in accordance with the predetermined operation characteristic, whether the floor cleaner operates based on the in-base-station operation request. A base station of the floor cleaner is located within a space below the clothes treatment device.

An embodiment of the present disclosure further provides a storage medium, such as a computer-readable storage medium. The storage medium has programs or instructions thereon to enable a computer to perform, when being executed, the operation control method of the dual washing machine. Therefore, the storage medium has the advantageous effects described in the above embodiments, which will not be described in detail in the embodiments of the present disclosure.

In another exemplary embodiment of the present disclosure, the computer-executable instructions are used to perform, when being executed by a computer processor, technical solutions of the operation control method as provided by any of the embodiments of the present disclosure.

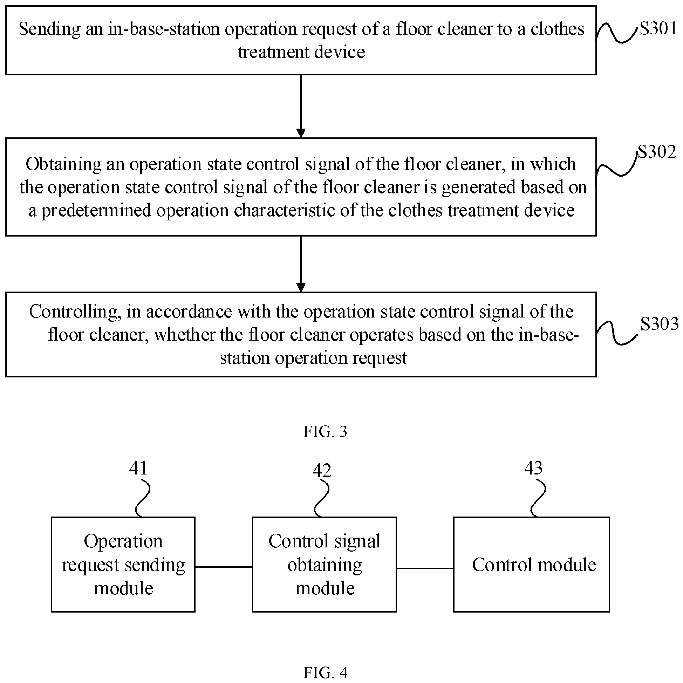

An embodiment of the present disclosure further provides another operation control method of a dual washing machine. FIG. 3 is a schematic flowchart of another operation control method of a dual washing machine according to an embodiment of the present disclosure. This method is applicable to application scenarios where control of the dual washing machine is required. The operation control method may be performed by an operation control apparatus of the dual washing machine according to an embodiment of the present disclosure, such as a controller of a floor cleaner. The operation control apparatus of the dual washing machine may be implemented in software and/or hardware. As shown in FIG. 3, the operation control method includes operations at blocks S301 to S303.

At block S301, an in-base-station operation request of a floor cleaner is sent to a clothes treatment device.

In an exemplary embodiment of the present disclosure, when the floor cleaner has an operation requirement in the base station, i.e., the floor cleaner needs to enter a base station of the floor cleaner in a space below the clothes treatment device to perform a predetermined action, the floor cleaner sends the in-base-station operation request to the clothes treatment device. For example, the floor cleaner needs to send a corresponding in-base-station operation request to the base station. Further, the base station sends the in-base-station operation request to the clothes treatment device, and accordingly, the clothes treatment device obtains the in-base-station operation request.

In some embodiments, the in-base-station operation request includes at least one of a charging request, a dust collection request, or a self-cleaning request. In an exemplary embodiment of the present disclosure, a charging structure, a dust collecting structure, and a self-cleaning structure of the floor cleaner are provided in the floor cleaner base station. When the floor cleaner needs to be charged, the floor cleaner can send a charging request to the base station. When the floor cleaner needs to perform dust collection, the floor cleaner can send a dust collection request to the base station. When the floor cleaner requires self-cleaning, the floor cleaner can send a self-cleaning request to the base station. Therefore, when the floor cleaner needs to be charged, or perform dust-collecting or self-cleaning, the floor cleaner can send a corresponding in-base-station operation request to the base station. Further, the clothes treatment device obtains a corresponding in-base-station operation request.

At block S302, an operation state control signal of the floor cleaner is obtained. The operation state control signal of the floor cleaner is generated based on a predetermined operation characteristic of the clothes treatment device.

In an exemplary embodiment of the present disclosure, a corresponding floor cleaner operation state control signal is generated based on the predetermined operation characteristic of the clothes treatment device. Further, the clothes treatment device sends the generated floor cleaner operation state control signal to the floor cleaner. The floor cleaner operation state control signal includes a signal for controlling the floor cleaner to operate in accordance with the in-base-station operation request, and a signal for controlling the floor cleaner to prohibit operation based on the in-base-station operation request.

In an exemplary embodiment of the present disclosure, the predetermined operation characteristic of the clothes treatment device can be used for characterizing the operation state of the clothes treatment device, and the obtaining the predetermined operation characteristic of the clothes treatment device is equivalent to obtaining the operation state of the clothes treatment device. Therefore, the operation state of the clothes treatment device can be determined by obtaining the predetermined operation characteristic of the clothes treatment device.

In some embodiments, the predetermined operation characteristic of the clothes treatment device may be a vibration degree of the clothes treatment device. It is possible to obtain an operation stage of the clothes treatment device and obtain the vibration degree of the clothes treatment device based on the operation stage. When the clothes treatment device is in a spin-drying stage, a drainage stage, or a pre-washing weighing stage, it is determined that the vibration degree of the clothes treatment device is greater than a predetermined vibration degree.

In an exemplary embodiment of the present disclosure, the vibration degree of the clothes treatment device is related to the current operation stage of the clothes treatment device. For example, when the clothes treatment device is in the spin-drying stage, the rotation speed of the inner drum of the clothes treatment device is relatively fast, and the vibration degree of the clothes treatment device is relatively great. When the clothes treatment device is in the pre-washing weighing stage, the inner drum of the clothes treatment device rotates to obtain a weight of the clothes to be washed through a rotation torque, and the rotation of the inner drum may cause a great vibration degree of the clothes treatment device. When the clothes treatment device is in the drainage stage, the spin-drying operation is generally performed immediately after completion of the drainage stage. Similarly, the rotation speed of the inner drum of the clothes treatment device is relatively fast, and the vibration degree of the clothes treatment device is relatively great, such that it can be determined that the current vibration degree of the clothes treatment device is greater than the predetermined vibration degree in the above-mentioned case.

In some embodiments, the vibration degree of the clothes treatment device may be obtained by providing a vibration sensor in the clothes treatment device, such that when a parameter detected by the vibration sensor is greater than a predetermined parameter, it is determined that the current vibration degree of the clothes treatment device is greater than the predetermined vibration degree. In some other embodiments, the vibration degree of the clothes treatment device may also be obtained by other technical means well known to those skilled in the art, which is not specifically limited by the embodiments of the present disclosure.

At block S303, in accordance with the operation state control signal of the floor cleaner, whether the floor cleaner operates based on the in-base-station operation request is controlled.

In an exemplary embodiment of the present disclosure, the base station of the floor cleaner is located in a space below the clothes treatment device. After the floor cleaner sends the in-base-station operation request to the clothes treatment device, the clothes treatment device generates a corresponding operation state control signal of the floor cleaner based on the operation state thereof, and sends the corresponding operation state control signal to the floor cleaner. When the operation state control signal received by the floor cleaner is a signal for controlling the floor cleaner to operate based on the in-base-station operation request, the in-base-station operation request of the floor cleaner is allowed, and the floor cleaner is controlled to operate based on the in-base-station operation request. When the operation state control signal received by the floor cleaner is a signal for controlling the floor cleaner to prohibit operation based on the in-base-station operation request, the in-base-station operation request of the floor cleaner is not allowed, and the floor cleaner is controlled to prohibit operation based on the in-base-station operation request.

In some embodiments, the vibration degree of the clothes treatment device is determined in accordance with the operation state control signal of the floor cleaner, and whether the floor cleaner operates based on the in-base-station operation request is controlled based on the vibration degree.

In an exemplary embodiment of the present disclosure, after the floor cleaner sends the in-base-station operation request to the base station, whether the floor cleaner can operate in accordance with the in-base-station operation request needs to be controlled based on a predetermined operation characteristic of the clothes treatment device. When the characteristic is determined that allows the floor cleaner to operate based on the in-base-station operation request based on the predetermined operation characteristic of the clothes treatment device, the floor cleaner can be controlled to operate based on the in-base-station operation request. When the characteristic is determined in accordance with the predetermined operation characteristic of the clothes treatment device that does not allow the floor cleaner to operate based on the in-base-station operation request, the floor cleaner can be controlled to prohibit operation based on the in-base-station operation request, for example, the floor cleaner can be controlled to stand in place.

Taking the floor cleaner sending a charging request as an example to provide exemplary description, when the floor cleaner needs to be charged, the charging request can be sent to the base station. If the predetermined operation characteristic of the clothes treatment device satisfies the charging request of the floor cleaner, the floor cleaner is controlled to be charged. The floor cleaner is controlled to prohibit charging if the predetermined operation characteristic of the clothes treatment device does not satisfy the charging request of the floor cleaner. Taking the floor cleaner sending a dust collection request as an example to provide exemplary description, when the floor cleaner needs to collect dust, the dust collection request can be sent to the base station. If the predetermined operating characteristic of the clothes treatment device satisfies the dust collection request of the floor cleaner, the floor cleaner is controlled to perform dust collection. If the predetermined operation characteristic of the clothes treatment device does not satisfy the dust collection request of the floor cleaner, the floor cleaner is controlled to prohibit dust collection. Taking the floor cleaner sending a self-cleaning request as an example to provide exemplary description, when the floor cleaner needs self-cleaning, the floor cleaner can send the self-cleaning request to the base station. If the predetermined operation characteristic of the clothes treatment device satisfies the self-cleaning request of the floor cleaner, the floor cleaner is controlled to perform self-cleaning. If the predetermined operation characteristic of the clothes treatment device does not satisfy the self-cleaning request of the floor cleaner, the floor cleaner is controlled to prohibit self-cleaning.

In some embodiments, the predetermined operation characteristics of the clothes treatment device include the vibration degree of the clothes treatment device. The vibration degree of the clothes treatment device is obtained to determine in accordance with the vibration degree whether to allow the floor cleaner to operate based on the in-base-station operation request.

In an exemplary embodiment of the present disclosure, it is required to obtain the vibration degree of the clothes treatment device after the clothes treatment device obtains the in-base-station operation request sent by the floor cleaner. If it is determined that the floor cleaner operates based on the in-base-station operation request, the clothes treatment device is vibrated to a great extent, which may easily affect the operation performance of the floor cleaner, such as affecting charging, dust collection, and self-cleaning of the floor cleaner. In this case, the floor cleaner can be controlled to be prohibited from operating based on the in-base-station operation request.

In an embodiment, when the floor cleaner needs to enter the base station for charging, a charging contact is provided in the base station. After the floor cleaner enters the base station, a charging contact of the floor cleaner contacts the charging contact of the base station to achieve charging. When the vibration degree of the clothes treatment device is great, the great vibration degree of the clothes treatment device may easily result in the condition that the floor cleaner cannot achieve docking with the charging contact point of the base station, and even causes an electrical safety problem. Therefore, when the vibration degree of the clothes treatment device is great, in order to avoid the above problem, the clothes treatment device controls the floor cleaner to prohibit charging and waits for signal update. That is, the floor cleaner is allowed to be charged when the vibration degree of the clothes treatment device is reduced to meet the requirement.

In an embodiment, when the floor cleaner needs to enter the base station for dust collection, a small dust collection box of the floor cleaner is engaged with a large dust collection box of the floor cleaner base station through a pipeline, and dust in the small dust collection box is suctioned into the large dust collection box by a fan. If the vibration degree of the clothes treatment device is great in this case, the small dust collection box in the floor cleaner is prone to being out of alignment with the large dust collection box in the floor cleaner base station, thereby causing problems such as air leakage and dust exposure. Therefore, when the vibration degree of the clothes treatment device is great, in order to avoid the above-mentioned problems, the clothes treatment device controls the floor cleaner to prohibit dust collection and waits for signal update. That is, the floor cleaner is allowed to collect dust when the vibration degree of the clothes treatment device is reduced to meets the requirement.

In an embodiment, when the floor cleaner needs to enter the base station for self-cleaning, the floor cleaner enters a fixed position in the base station, and is self-cleaned with a self-cleaning structure, such as, but not limited to, a brush in the base station. If the vibration degree of the clothes treatment device is great in this case, the effect of the self-cleaning is easily affected. Therefore, when the vibration degree of the clothes treatment device is great, in order to avoid the above-mentioned problem, the clothes treatment device controls the floor cleaner to prohibit self-cleaning and waits for signal update. That is, the floor cleaner is allowed to perform self-cleaning when the vibration degree of the clothes treatment device is reduced to meet the requirement. In an embodiment, the floor cleaner may continuously send the in-base-station operation request to the clothes treatment device, or may re-obtain the in-bas-station operation request of the floor cleaner after the state of the clothes treatment device state is updated.

In view of the above, a predetermined vibration degree may be set. It is determined whether to allow the floor cleaner to operate based on the in-base-station operation request by comparing a logical relationship between the vibration degree of the clothes treatment device and the predetermined vibration degree. In an exemplary embodiment of the present disclosure, when the vibration degree of the clothes treatment device is greater than the predetermined vibration degree, the clothes treatment device controls the floor cleaner to prohibit operation based on the in-base-station operation request. When the vibration degree of the clothes treatment device is smaller than or equal to the predetermined vibration degree, the clothes treatment device controls the floor cleaner to operate based on the in-base-station operation request.

Therefore, when it is obtained that the vibration degree of the clothes treatment device is great, i.e., when the vibration degree is greater than the predetermined vibration degree, the in-base-station operation request sent by the floor cleaner is rejected. When it is obtained that the vibration degree of the clothes treatment device is smaller than or equal to the predetermined vibration degree, the operation request in the base station is allowed. In this way, the floor cleaner is controlled to operate based on the in-base-station operation request at an appropriate time, such that at least one of charging, dust collection, or self-cleaning of the floor cleaner can be accomplished, and the interference with at least one of charging, dust collection, or self-cleaning performed by the floor cleaner that is caused by the floor cleaner operation based on the in-base-station operation request at an inappropriate time may be avoided.

It needs to be noted that when the clothes treatment device is in a predetermined state, the clothes treatment device controls the floor cleaner to prohibit operation based on the in-base-station operation request. In this case, it is preferable to control the floor cleaner to be located outside the base station or away from the base station, or to allow the floor cleaner to be located in the base station and the floor cleaner is controlled to not perform a corresponding action in the base station.

In some embodiments, the controlling, in accordance with the operation state control signal of the floor cleaner, whether the floor cleaner operates based on the in-base-station operation request includes: when it is determined based on the operation state control signal of the floor cleaner that the clothes treatment device is in the spin-drying stage, the drainage stage, or the pre-washing weighing stage, controlling the floor cleaner to prohibit operation based on the in-base-station operation request. Reference will now be made in detail to the above embodiments, which is not described in detail herein.

According to another operation control method of a dual washing machine provided by an embodiment of the present disclosure, an operation state control signal of a floor cleaner sent by a clothes treatment device is obtained after the floor cleaner sends an in-base-station operation request of the floor cleaner to the clothes treatment device, thereby controlling whether the floor cleaner operates based on the in-base-station operation request based on the operation state control signal of the floor cleaner. When the operation state control signal of the floor cleaner allows the floor cleaner to operate based on the in-base-station operation request, the floor cleaner is controlled to operate based on the in-base-station operation request. When the operation state control signal of the floor cleaner does not allow the floor cleaner to operate based on the in-base-station operation request, the floor cleaner is controlled to prohibit operation based on the in-base-station operation request. Therefore, mutual transmission of signals can be achieved between the floor cleaner and the clothes treatment device, effectively avoiding the problem that the operation process of one electric appliance affects the operation performance of another electric appliance and thus affects the user's experience, thereby improving the intelligent degree of the dual washing machine.

In summary, the clothes treatment device can communicate with the base station of the floor cleaner through a wire connection, and logical mutual exclusion configuration is performed on the operating process of the two electric appliances through software control. Based on a main control board of the clothes treatment device, the base station of the floor cleaner, and a control board of the floor cleaner, programs of each of stages of the floor cleaner and the clothes treatment device are controlled through software signal determination and recognition, to prevent the operation performance of one electrical appliance from being affected by the operating state of another electrical appliance.

An embodiment of the present disclosure further provides another operation control apparatus of a dual washing machine based on the same inventive concept. FIG. 4 is a schematic diagram showing a structure of another operation control apparatus of a dual washing machine according to an embodiment of the present disclosure. As shown in FIG. 4, the operation control apparatus includes an operation request sending module 41, a control signal obtaining module 42, and a control module 43. The operation request sending module 41 is configured to send an in-base-station operation request of a floor cleaner to a clothes treatment device. The control signal obtaining module 42 is configured to obtain an operation state control signal of the floor cleaner. The operation state control signal of the floor cleaner is generated based on a predetermined operation characteristic of the clothes treatment device. The control module 43 is configured to controlled, in accordance with the operation state control signal of the floor cleaner, whether the floor cleaner operates based on the in-base-station operation request.

An embodiment of the present disclosure further provides a storage medium, such as a computer-readable storage medium. The storage medium has programs or instructions stored thereon to perform, when being executed by a computer, part or all implementation modes of the embodiments of the operation control method of the dual washing machine shown in FIG. 1 or FIG. 3. Therefore, the storage medium has the advantageous effects described in the above embodiments, which will not be described in detail in the embodiments of the present disclosure.

In another exemplary embodiment of the present disclosure, the computer-executable instructions are used to perform, when being executed by a computer processor, technical solutions of the operation control method as provided by any of the embodiments of the present disclosure.

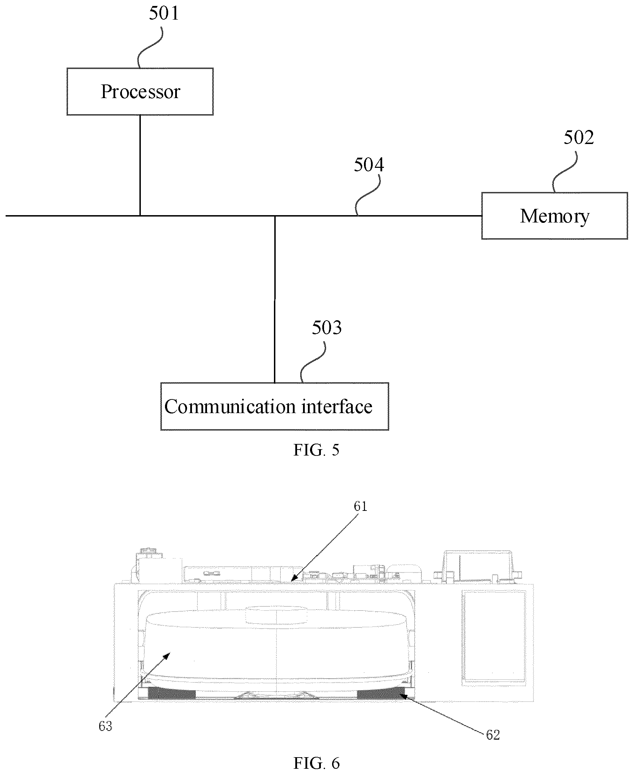

An embodiment of the present disclosure also provides an electric appliance on the basis of the above-mentioned embodiments. FIG. 5 is a schematic diagram showing a structure of an electric appliance according to an embodiment of the present disclosure. As shown in FIG. 5, the electric appliance includes a processor 501 and a memory 502. The processor 501 performs the method in FIG. 1 by invoking programs or instructions stored in the memory, in which the electric appliance may be, for example, a clothes treatment device. In another embodiment, the processor 501 performs the method in FIG. 3, in which the electric appliance may be, for example, a floor cleaner. Thus, the electric appliance has the advantages described in the above embodiments, which will not be described in detail herein.

As shown in FIG. 5, the electric appliance may include at least one processor 501, at least one memory 502, and at least one communication interface 503. The various assemblies of the electric appliance are coupled together through a bus system 504. The communication interface 503 is configured to transmit information with an external device. As can be appreciated, the bus system 504 is configured to enable connection communication between these assemblies. The bus system 504 includes a power bus, a control bus, and a status signal bus except for a data bus. For the clarity of illustration, however, the various buses are labeled as the bus system 504 in FIG. 5.

It could be understood that the memory 502 in this embodiment may be either volatile memory or nonvolatile memory, or may include both volatile and nonvolatile memory. In some embodiments, the memory 502 stores the following elements: executable units or data structures, or subsets thereof, or extended sets of operating systems and applications thereof. In an embodiment of the present disclosure, the processor 501 is configured to perform, when invoking programs or instructions stored in the memory 502, the method according to the embodiments of the present disclosure.

The method of the embodiments of the present disclosure may be applied to or implemented by the processor 5601. The processor 501 may be an integrated circuit chip with a signal processing capability. In an implementation process, the operations at the blocks of the method as described above may be completed by an integrated logic circuit in hardware or instructions in software in the processor 501. The processor 501 mentioned above may be a general-purpose processor, a Digital Signal Processor (DSP), an Application Specific Integrated Circuit (ASIC), a Field Programmable Gate Array (FPGA), or other programmable logic devices, discrete gate, or transistor logic devices, or discrete hardware assemblies. A general-purpose processor may be a microprocessor, or the processor may be any common processor.

The steps of the method in the embodiments of the present disclosure may be performed directly by a hardware decoding processor, or by a combination of hardware and software units in the decoding processor. A software unit may be located in a random access memory, a flash memory, a read-only memory, a programmable read-only memory, an electrically erasable programmable memory, a register, or other storage media well known in the art. The storage medium is located in the memory 502. The processor 501 reads the information in the memory 502, and is in combination with the hardware thereof to complete the steps of the above method.

The electric appliance may include one physical component or a plurality of physical components in accordance with instructions generated by the processor 501 in performing the method of the embodiments of the present disclosure. Different physical components may be provided inside the electric appliance or outside the electric appliance, and may be a cloud server or the like. Various physical components cooperate with the processor 501 and memory 502 to implement the operations of the electric appliance in this embodiment.

From the above description of embodiments, it will be clear to those skilled in the art that the present disclosure may be implemented by means of software and necessary general-purpose hardware, but also may be implemented by means of hardware. The former is a better implementation mode in many cases. Based on such understanding, essential parts of the technical solutions of the present disclosure or a part of the technical solutions that contributes to the related art can be embodied in a form of a software product, which can be stored on a computer-readable storage medium, such as a floppy disk, a Read-Only Memory (ROM), a Random Access Memory (RAM), a flash, a hard disk, or an optical disk of a computer. The computer-readable storage medium includes instructions to cause a computer device (which may be a personal computer, a server, a network device, or the like) to perform the method of various embodiments of the present disclosure.

An embodiment of the present disclosure further provides a dual washing machine. FIG. 6 is a schematic diagram showing a structure of a dual washing machine according to an embodiment of the present disclosure. As shown in FIG. 6, the dual washing machine includes a floor cleaner 63 and a clothes treatment device 61 communicatively connected to the floor cleaner 63. The clothes treatment device 61 is configured to perform the method shown in FIG. 1, and the floor cleaner 63 is configured to perform the method shown in FIG. 3. Therefore, the the dual washing machine has the advantages described in the above-described embodiments and will not be described in detail herein.

As shown in FIG. 6, the clothes treatment device 61 is disposed above the base station 62 of the floor cleaner, and the clothes treatment device 61 and the base station 62 are located in the same space. The base station 62 of the floor cleaner is located in the space below the clothes treatment device 61, and the clothes treatment device 61 and the floor cleaner 63 are powered by the same power source. The floor cleaner 63 may perform charging, self-cleaning, dust collection, and similar related operations at the base station 62 of the floor cleaner. The clothes treatment device 61 and the base station 62 of the floor cleaner communicate with each other via a wire connection, and perform mutual signal transmission, to realize that the clothes treatment device 61 and the floor cleaner 63 mutually transmit operation signals, and to realize that the operating processes of the clothes treatment device 61 and the floor cleaner 63 are mutually exclusive via software control. That is, the clothes treatment device 61 and the floor cleaner 63 do not operate at the same time, to avoid interference caused by the operating process of the clothes treatment device 61 with the operation requirement of the floor cleaner 63. It is to be noted that the embodiments of the present disclosure do not specifically limit the communication mode between the clothes treatment device and the floor cleaner, and the clothes treatment device and the floor cleaner may be sold together or separately.

It needs to be noted that the embodiments of the present disclosure can also be applied to the case where an upper machine is an electric appliance occupying a large area and a lower machine is an electric appliance that can be temporarily separated from the upper machine to operate independently.

It needs to be noted that the relational terms, such as "first" and "second", are used only to distinguish one entity or operation from another entity or operation without necessarily requiring or implying any such actual relationship or order between such entities or operations. Furthermore, the terms "including", "containing", or any other variation thereof are intended to cover non-exclusive inclusion, such that a process, a method, an article, or a device that includes a list of elements does not include only those elements, but may include other elements not expressly listed or inherent to such process, method, article, or device. Without further limitation, the elements limited by the statement "including one..." do not exclude the existence of other identical elements in the process, method, article, or device that includes the said elements.

The above is only the specific embodiments of the present disclosure, which enables those skilled in the art to understand or implement the present disclosure. Various modifications to these embodiments will be readily apparent to those skilled in the art, and the generic principles defined herein may be implemented in other embodiments without departing from the spirit or scope of the present disclosure. Therefore, the present disclosure is not intended to be limited to the embodiments described herein, but is to conform to the widest range consistent with the principles and novel features disclosed herein.

### Industrial Applicability

The present disclosure provides an operation control method of a dual washing machine. The operation control method includes: obtaining an in-base-station operation request of a floor cleaner; obtaining a predetermined operation characteristic of a clothes treatment device; and controlling, in accordance with the predetermined operation characteristic, whether the floor cleaner operates based on the in-base-station operation request. A base station of the floor cleaner is located in a space below the clothes treatment device. Therefore, signal transmission can be carried out between the floor cleaner and the clothes treatment device. Based on the predetermined operation characteristics of the clothed treatment device, the floor cleaner can be controlled to prohibit operation based on the in-base-station operation request when it is determined that the operation process of the clothes treatment device may affect the operation performance of the floor cleaner. When waiting for the predetermined operation characteristics of the clothes treatment device to update, the floor cleaner is controlled to operate based on the in-base-station operation request, effectively avoiding the problem of the operation process of one electrical appliance affecting the operation performance of another electrical appliance, which would otherwise affect the user experience. This improves the intelligence level of the operation of the dual washing machine and has strong industrial practicality.

## Claims

1. An operation control method of a dual washing machine, comprising:
obtaining an in-base-station operation request of a floor cleaner;
obtaining a predetermined operation characteristic of a clothes treatment device; and
controlling, in accordance with the predetermined operation characteristic, whether the floor cleaner operates based on the in-base-station operation request,
wherein a base station of the floor cleaner is located within a space below the clothes treatment device.

2. The operation control method according to claim 1, wherein the in-base-station operation request comprises at least one of a charging request, a dust collection request, or a self-cleaning request.

3. The operation control method according to claim 1 or 2, wherein said obtaining the predetermined operation characteristic of the clothes treatment device comprises obtaining a vibration degree of the clothes treatment device; and
said controlling, in accordance with the predetermined operation characteristic, whether the floor cleaner operates based on the in-base-station operation request comprises:
controlling, in accordance with the vibration degree, whether the floor cleaner operates based on the in-base-station operation request;
when the vibration degree is greater than a predetermined vibration degree, controlling the floor cleaner to prohibit operation based on the in-base-station operation request; and
when the vibration degree is smaller than or equal to the predetermined vibration degree, controlling the floor cleaner to operate based on the in-base-station operation request.

4. The operation control method according to claim 3, wherein said obtaining the vibration degree of the clothes treatment device comprises:
obtaining an operation stage of the clothes treatment device and obtaining the vibration degree of the clothes treatment device based on the operation stage, wherein when the clothes treatment device is in a spin-drying stage, a drainage stage, or a pre-washing weighing stage, it is determined that the vibration degree of the clothes treatment device is greater than the predetermined vibration degree; or
obtaining a vibration sensing detection parameter of the clothes treatment device and obtaining the vibration degree of the clothes treatment device based on the vibration sensing detection parameter, wherein when the vibration sensing detection parameter is greater than a predetermined parameter, it is determined that the vibration degree of the clothes treatment device is greater than the predetermined vibration degree.

5. The operation control method according to claim 1 or 2, wherein said obtaining the predetermined operation characteristic of the clothes treatment device comprises obtaining an operation stage of the clothes treatment device; and
said controlling, in accordance with the predetermined operation characteristic, whether the floor cleaner operates based on the in-base-station operation request comprises:
controlling, in accordance with the operation stage of the clothes treatment device, whether the floor cleaner operates based on the in-base-station operation request; and
when the clothes treatment device is in a spin-drying stage, a drainage stage, or a pre-washing weighing stage, controlling the floor cleaner to prohibit operation based on the in-base-station operation request.

6. The operation control method according to claim 1, when the in-base-station operation request is a dust collection request, the method further comprising:
obtaining a voice prompt state of the clothes treatment device;
controlling, in accordance with the voice prompt state, whether the floor cleaner operates based on the dust collection request; and
when the clothes treatment device needs to provide a voice prompt to a user, controlling the floor cleaner to prohibit operation based on the dust collection request.

7. An operation control method of a dual washing machine, comprising:
sending an in-base-station operation request of a floor cleaner to a clothes treatment device;
obtaining an operation state control signal of the floor cleaner, wherein the operation state control signal of the floor cleaner is generated based on a predetermined operation characteristic of the clothes treatment device; and
controlling, in accordance with the operation state control signal of the floor cleaner, whether the floor cleaner operates based on the in-base-station operation request, wherein a base station of the floor cleaner is located within a space below the clothes treatment device.

8. The operation control method according to claim 7, wherein the in-base-station operation request comprises at least one of a charging request, a dust collection request, or a self-cleaning request.

9. The operation control method according to claim 7 or 8, wherein said controlling, in accordance with the operation state control signal of the floor cleaner, whether the floor cleaner operates based on the in-base-station operation request comprises:
when it is determined in accordance with the operation state control signal of the floor cleaner that a vibration degree of the clothes treatment device is greater than a predetermined vibration degree, controlling the floor cleaner to prohibit operation based on the in-base-station operation request; and
when it is determined in accordance with the operation state control signal of the floor cleaner that the vibration degree of the clothes treatment device is smaller than or equal to the predetermined vibration degree, controlling the floor cleaner to operate based on the in-base-station operation request.

10. The operation control method according to claim 7 or 8, wherein said controlling, in accordance with the operation state control signal of the floor cleaner, whether the floor cleaner operates based on the in-base-station operation request comprises:
when it is determined in accordance with the operation state control signal of the floor cleaner that the clothes treatment device is in a spin-drying stage, a drainage stage, or a pre-washing weighing stage, controlling the floor cleaner to prohibit operation based on the in-base-station operation request.

11. An electric appliance, comprising:
a memory; and
a processor,
wherein the processor is configured to perform, by invoking a program or an instruction stored in the memory, an operation control method according to any one of claims 1 to 6 or an operation control method according to any one of claims 7 to 10.

12. A dual washing machine, comprising:
a floor cleaner; and
a clothes treatment device communicatively connected to the floor cleaner,
wherein the clothes treatment device is configured to perform an operation control method according to any one of claims 1 to 6; and
wherein the floor cleaner is configured to perform an operation control method according to any one of claims 7 to 10.
